# EUROPEAN PATENT APPLICATION

(11) **EP 3 533 566 A1**
(43) Date of publication of application: **04.09.2019**
(21) Application number: 18159714.7
(22) Date of filing: 02.03.2018
(51) Int. Cl.: B25H 3/02

(54) **TRANSPORTATION SYSTEM**

(71) Applicant: Raaco A/S, 4800 Nykøbing F (DK)
(72) Inventor: Damberg, Peter-Thomas, 4800 Nykøbing F. (DK)
(74) Representative: Chas. Hude A/S

(57) **Abstract**

System for transporting a number of assortment boxes or toolboxes, the system comprising at least one frame part (1), said frame part comprising a top (2), a bottom (3), and a front opening (4), and said frame part forming at least one compartment (7) adapted to contain at least one assortment box or toolbox (23), where said front opening is dimensioned for receiving and introducing the at least one assortment box or toolbox into said at least one compartment, a transportation unit (28) for transporting said at least one frame part (1), where said transportation unit comprises a carrying means (29), a stabilisation means (30), wheels (31), a handle (32), and an arm (33), where a distal end of said arm is connected to said carrying means and said wheels, and a proximal end of said arm is connected to said handle, and where said carrying means is adapted to carry the bottom of said at least one frame part, and where said stabilisation means is arranged at said arm, where it is adapted to fixate said at least one frame part to said transportation unit.

## Description

The present invention relates to a system for transporting a number of assortment boxes or toolboxes, the system comprising:
- at least one frame part, said frame part comprising a top, a bottom, and a front opening, and said frame part forming at least one compartment adapted to contain at least one assortment box or toolbox, where said front opening is dimensioned for receiving and introducing the at least one assortment box or toolbox into said at least one compartment,
- a transportation unit for transporting said at least one frame part, where said transportation unit comprises a carrying means, a stabilisation means, wheels, a handle, and an arm, where a distal end of said arm is connected to said carrying means and said wheels, and a proximal end of said arm is connected to said handle, and where
   - said carrying means is adapted to carry the bottom of said at least one frame part, and where
   - said stabilisation means is arranged at said arm, where it is adapted to fixate said at least one frame part to said transportation unit.

For example, when doing carpentry or installing items, such as lamps, in your house, it is well known to make use of a toolbox or assortment box, containing e.g. screws, nails and bolts. Depending e.g. on whether you work professionally or you just install items in your spare time, and depending on the variety of e.g. screws, nails and bolts to be used, you may need to use a number of toolboxes and/or assortment boxes. Transporting a large number of toolboxes and/or assortment boxes is not possible for one person to do, due to the total weight of said boxes and as a person can only carry a limited number of boxes in each hand.

To remedy the above disadvantage, the toolboxes or assortment boxes may be transported a few at a time or alternatively, be transported by use of a transportation unit such as a wagon or a trolley. Use of a trolley would be advantageous as a trolley can carry a large number of toolboxes or assortment boxes simultaneously. However, a trolley would most likely not be designed with the specific purpose of carrying the toolboxes or assortment boxes for which reason said boxes would risk falling off the trolley e.g. when the trolley is turned around a corner or driven oven a bump.

Thus, there is a need for a system for transporting a number of assortment boxes or toolboxes in a safe manner, where the toolboxes or assortment boxes are arranged in a stable manner on the system.

In accordance with the invention, there is provided a system for transporting a number of assortment boxes or toolboxes, the system comprising:
- at least one frame part, said frame part comprising a top, a bottom, and a front opening, and said frame part forming at least one compartment adapted to contain at least one assortment box or toolbox, where said front opening is dimensioned for receiving and introducing the at least one assortment box or toolbox into said at least one compartment,
- a transportation unit for transporting said at least one frame part, where said transportation unit comprises a carrying means, a stabilisation means, wheels, a handle, and an arm, where a distal end of said arm is connected to said carrying means and said wheels, and a proximal end of said arm is connected to said handle, and where
   - said carrying means is adapted to carry the bottom of said at least one frame part, and where
   - said stabilisation means is arranged at said arm, where it is adapted to fixate said at least one frame part to said transportation unit.

Within the present invention, the term fixate is to be understood as preventing one element from moving relative to another element, whereby the two elements are touching (and possibly being in contact with each other). Thus, said stabilisation means is adapted to prevent said at least one frame part from moving relative to said transportation unit, so that said frame part is prevented from moving or sliding relative to said carrying means.

Providing a system for transporting a number of assortment boxes or toolboxes has the advantage that the user may easily and fast move said boxes from one place to another, such as from a car to the place where work has to be carried out.

Providing at least one frame part for containing at least one assortment box or toolbox has the advantage that an assortment box may easily be removed from said frame part without having to dismount said frame part. In case the system comprises more than one frame part, an assortment box can thereby be removed from one of said frame parts without having to be dismounted one or more of the other frame parts.

Providing a transportation unit comprising stabilisation means has the advantage that the transportation unit may be moved around fast, such as around corners and/or over an uneven surface, without risking that the at least one frame part falls off the transportation unit. Having frame part(s) fall off the transportation unit may result in the frame part(s) breaking, and/or the assortment boxes or toolboxes falling out of the frame part(s) which may result in said boxes breaking or items contained in the boxes being spread out on the ground.

Having stabilisation means arranged at said arm of the transportation unit, which stabilisation means is adapted to fixate said frame part to said transportation unit, will ensure that said frame part would be prevented from moving relative to said arm. Thereby, said frame part would be prevented from e.g. tilting in a situation where the transportation unit is moved fast around a corner, and e.g. from making a hop on the carrying means in a situation where the transportation unit is moved over a bump on the ground.

Thus, a system for transporting a number of assortment boxes or toolboxes with an increased stability and comfort is provided.

In an embodiment, said at least one frame part may be adapted to form two or more compartments each adapted to contain an assortment box or toolbox.

In an embodiment, said stabilisation means of said arm can be adapted to be displaced along a longitudinal axis of said arm.

The arm of the transportation unit connects said carrying means and said wheels to said handle and may therefore have an extended shape and have a longitudinal axis along its extension. When arranging a frame part on said carrying means, the height direction of the frame part may be substantially parallel with said longitudinal axis of said arm. For each extra frame part arranged on the transportation unit, the top of the uppermost frame part may be positioned closer to the proximal end of said arm.

Therefore, it would be advantageous that the stabilisation means of said arm can be adapted to be displaced (such as slide) along the longitudinal axis of said arm so that said stabilisation means may be moved to the location of the top of the uppermost frame part arranged on the transportation unit, where it may touch and fixate said uppermost frame part.

In an embodiment, said stabilisation means of said arm can be adapted to be releasably fixed at a given position along the longitudinal axis of said arm.

Providing that the stabilisation means of said arm may be fixed at a given position/location along the longitudinal axis of said arm facilitates that said stabilisation means may be moved/displaced to the location of the top of said at least one frame part, then touch at least part of said top and be fixated at that location. Thereby, the frame part(s) may be fixated and stabilised relative to the transportation unit.

In an embodiment, said stabilisation means of said arm can be adapted to connect to at least part of the top of said frame part.

Thereby, the fixation of said frame part relative to said transportation unit may be further improved as the stabilisation means may engage with said at least part of the top of said frame part. Providing an engagement between two elements may result in a more solid connection compared to two elements merely touching. Thus, a more stable system is achieved.

In an embodiment, said stabilisation means of said arm can comprise a recess adapted to engage with a protrusion of the top of said frame part.

Providing a connection between two elements by engaging a recess of one element with a protrusion of another element is known to provide a solid connection, which is simple to use and which would most likely involve reduced expenses if it requires repair or exchanges, compared to more complicated connections.

In an embodiment, said arm can comprise a groove extending in the longitudinal axis of said arm, where the stabilisation means of said arm can be adapted to slide along said groove.

Providing a groove extending in the longitudinal axis of said arm along which the stabilisation means of said arm can be adapted to slide results in a simple and effective way of displacing said stabilisation means as the user simply has to slide said stabilisation means along said groove. Further, making use of a groove in said arm and e.g. a stabilisation means comprising a foot adapted to be contained in and slide along said groove provides a solid stabilisation means.

In an embodiment, the carrying means can comprise a supporting surface which can be adapted to receive the bottom of said at least one frame part.

Providing a supporting surface on which the bottom of said at least one frame part may be arranged has the advantage that it is easy for the user to identify where the frame part is to be placed. Further, a surface is advantageous to use for carrying an element as the force per area exerted by the element is distributed over the entire surface and not just on few points.

In an embodiment, a cross-sectional area of said supporting surface can be substantially equal to a cross-sectional area of the bottom of said frame part.

By having a cross-sectional area of said supporting surface, which is substantially equal to the cross-sectional area of the bottom of said frame part, it is ensured that the supporting surface of the carrying means (and therefore of the transporting unit) takes up the minimum space possible when parked on the ground or e.g. in the rear compartment of a car which transports the system from one place to another. Thereby, the largest possible number of systems can be stored per area.

In an embodiment, said stabilisation means can be further arranged at said carrying means, where it can be adapted to fixate at least part of the bottom of said frame part.

Having a stabilisation means arranged at the carrying means would further reduce the risk of the bottom of said frame part moving relative to the carrying means so that said frame part would be located more solidly on said carrying means.

Providing stabilisation means on both the carrying means and at said arm of the transportation unit increases the effect of stabilising the at least one frame part relative to the transportation unit as said frame part(s) is(are) prevented from both sliding, tilting and hopping relative to the transportation unit which also results in an increased stability and therefore comfort in moving the transportation unit around.

In an embodiment, said stabilisation means of said carrying means can comprise at least one recess.

At least one recess may be arranged at the carrying means, such as in the supporting surface of the carrying means. A recess is effective for receiving and holding, and thereby fixating, an element (the frame part) in one place.

In an embodiment, said at least one recess can be adapted to engage with at least one protrusion arranged at the bottom of said frame part.

Providing a protrusion arranged at the bottom of said frame part, where said at least one recess of the stabilisation means is adapted to engage with said protrusion, a releasable connection is obtained between the frame part and the carrying means. Thereby, the user is easily guided how to place the frame part correctly and solidly on the carrying means, whereby the at least one frame part is located in a more stable manner on the transportation unit when the transportation unit is moved around by the user.

In an embodiment, the system can comprise two or more frame parts adapted to be releasably connected to each other.

In case two or more frame parts are adapted to be releasably connected to each other it is ensured that the frame parts do not move relative to each other when they are arranged on the transportation unit. Thus, the stability of the system is further improved. Further, if the two or more frame parts are releasably connected, the user has the possibility of lifting two or more frame parts as one unit which would be advantageous if the user needs to remove/replace the two or more frame part at the same time, or if another underlying frame part has to be removed. This is saving time.

In an embodiment, the system can comprise two or more frame parts arranged on top of each other, where the supporting surface can be adapted to receive the bottom of the lowermost frame part and the stabilisation means of said arm can be adapted to fixate the uppermost frame part.

Thereby, the two or more frame parts may be arranged on and carried by the supporting surface and be fixated relative to the transportation unit by use of only the one stabilisation means of said arm and a supporting surface, as said frame parts are arranged on top of each other.

When providing the stabilisation means on also the carrying means, such as on the supporting surface, the bottom of the lowermost frame part may be fixated relative to the carrying means which in total results in an increased stabilisation of the two or more frame parts relative to the transportation unit.

In an embodiment, the at least one frame part can comprise a handle arranged on its top.

Thereby, a frame part may easily be removed from the transportation unit and be carried away.

In an embodiment, the front opening of said at least one frame part can be adapted to be faced away from said arm, when said at least one frame part is arranged on said carrying means.

Thereby, it would be possible for the user to remove an assortment box or toolbox easily from said at least one frame part via the front opening of said frame part and also to insert an assortment box or toolbox easily into the at least one compartment of said frame part. Therefore, there is no need for the user to have to remove or rotate said at least one frame part from/relative to the transportation unit in order to gain access to said at least one compartment. Thus, easy and fast access to the assortment boxes or toolboxes is obtained.

The structure and function of the system for transportation and the method of using it will be described in more detail below with references to exemplary embodiments shown in the drawings wherein,
Fig. 1 shows an embodiment of a frame part, seen in a perspective view.
Fig. 2 shows an embodiment of a frame part containing two assortment boxes, seen in a perspective view.
Fig. 3 shows an embodiment of a frame part, seen in a perspective view from the back.
Fig. 4 shows an embodiment of a transportation unit, seen in a perspective view.
Fig. 5 shows an embodiment of a transportation unit, seen in a perspective view.
Fig. 6 shows an embodiment of a transportation unit, seen from the side.
Fig. 7 shows an embodiment of a system for transporting a number of assortment boxes or toolboxes, seen in a perspective view.
Fig. 8 shows an embodiment of a system for transporting a number of assortment boxes or toolboxes, seen in a perspective view.
Fig. 9 shows an embodiment of a system for transporting a number of assortment boxes or toolboxes, seen from the side.

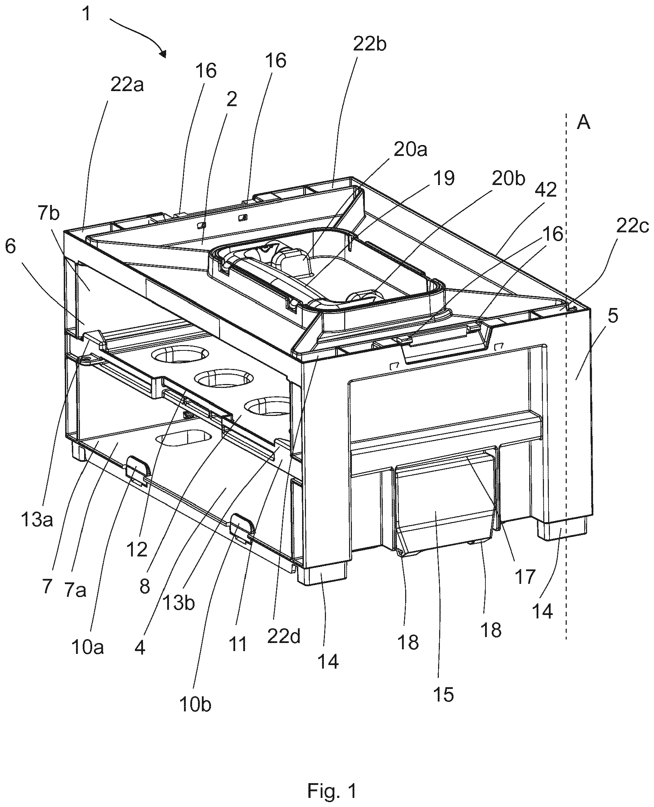

Fig. 1 shows an embodiment of a frame part 1, seen in a perspective view.

In Fig. 1, it is shown that the frame part 1 may comprise a top 2, a bottom 3 and a front opening 4. In the embodiment of Fig. 1, the frame part 1 may further comprise a first 5 and a second side 6 and a back (not shown). Therefore, said frame part 1 may form at least one compartment 7 in the inner volume of said frame part 1 which compartment 7 may be adapted to contain at least one assortment box or toolbox. Said front opening 4 may be dimensioned for receiving and introducing an assortment box or toolbox into said at least one compartment 7.

In the embodiment of Fig. 1, it is shown that the compartment 7 of the frame part 1 may contain a shelve 8 dividing the compartment 7 into two separate compartments 7a,7b, each being adapted to contain an assortment box or toolbox.

At a lower edge 9 of the lower compartment 7a, which edge 9 is arranged at the front opening 4 of the frame part 1, there is provided at least one stop element 10a. In Fig. 1, a first 10a and a second stop element 10b are provided. Said stop elements 10a,10b of the lower compartment 7a is adapted to prevent an assortment box or toolbox placed in the lower compartment 7a from sliding out of said compartment 7a. Thus, to remove an assortment box or toolbox form said lower compartment 7a, said box has to be lifted above said stop elements 10a,10b.

At a lower edge 11 of the upper compartment 7b, which edge 11 is arranged at the front opening 4 of the frame part 1, there is provided at least one stop element. In Fig. 1, the stop element of the upper compartment 7b is illustrated in the form of an edge 12 and two corner stops 13a,13b which all extend further in the height direction A of the frame part 1 (i.e. are thicker) than said shelve 8. Said stop element 12,13a,13b of the upper compartment 7b is adapted to prevent an assortment box or toolbox placed in the upper compartment 7b from sliding out of said compartment 7b. Thus, to remove an assortment box or toolbox form said upper compartment 7b, said box has to be lifted above said stop elements 12,13a,13b.

At the bottom 3 of the frame part 1, protrusions 14, e.g. in the form of feet 14, may be arranged.

In Fig. 1, a connection device in the form of a connection handle 15 and connection taps 16 may be provided at the first 5 and second side 6 of the frame part 1. When said frame part 1 is arranged on top of another frame part, said connection handle 15 may be rotated around a pivot point, and recesses 18 of the connection handle 15 may engage with connection taps (not shown) of said other frame part (connection taps which are similar to and arranged similar to the connection taps 16 of the frame part 1 of Fig. 1). Thus, the engagement between a connection handle and connection taps may be a snap-engagement. The engagement may be released again by rotating/pivoting the connection handle 15 away from the connection taps.

The top 2 of the frame part 1 may comprise a handle 19 which is pivotable relative to two pivot points 20a,20b. The top 2 of the frame part 1 may further comprise a structure 21 defining recesses 22a-22d adapted to engage with the feet 14 of another frame part 1 placed on top of said frame part 1.

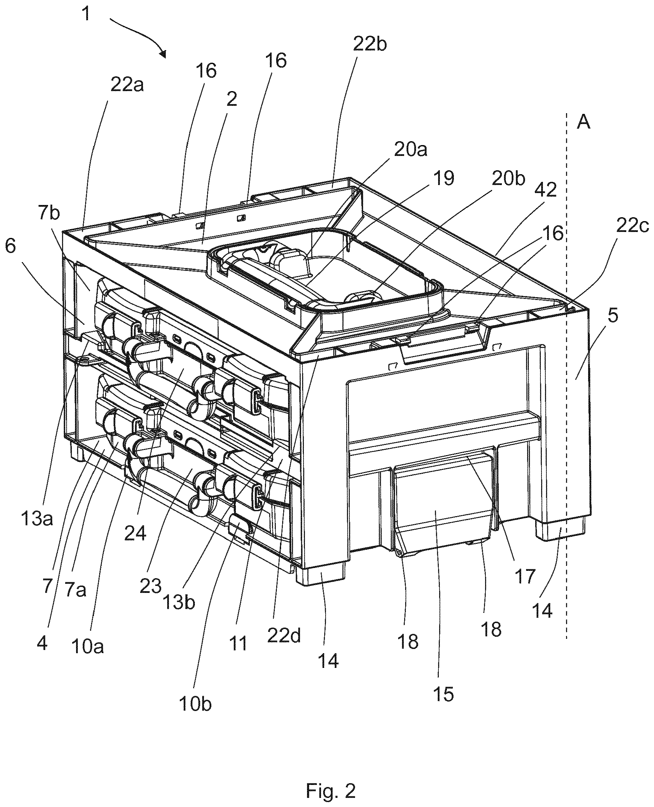

Fig. 2 shows an embodiment of a frame part 1 containing two assortment boxes 23,24, seen in a perspective view.

For the same features as shown in Fig. 1, the same reference numbers have been used.

In Fig. 2, it is shown that an assortment box 23 has been inserted in the lower compartment 7a via the front opening 4, and that an assortment box 24 has been inserted in the upper compartment 7b via the front opening 4.

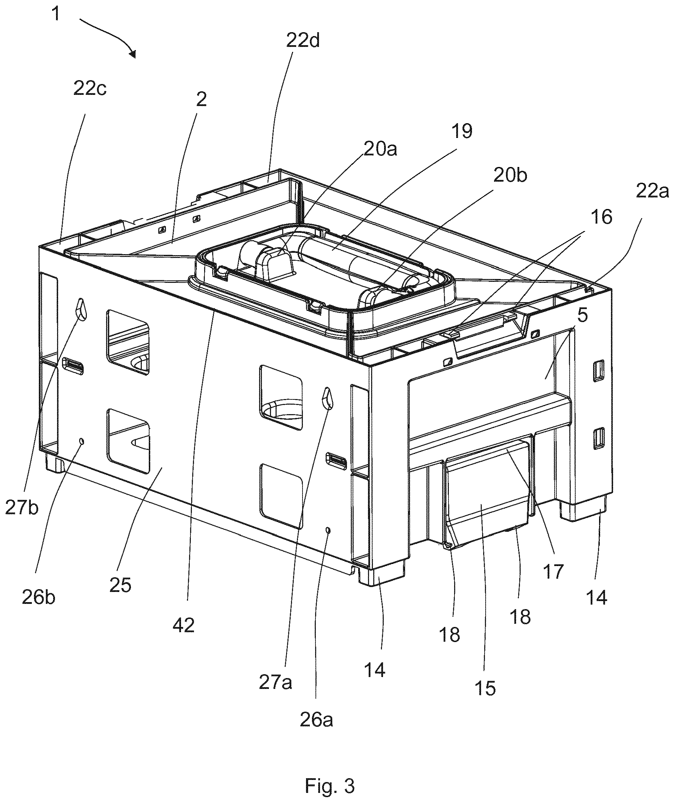

Fig. 3 shows an embodiment of a frame part 1, seen in a perspective view from the back.

For the same features as shown in the previous Figs., the same reference numbers have been used.

In Fig. 3, it is shown that the back 25 of the frame part 1 may comprise a first 26a and a second hole 26b suitable for receiving a bolt arranged in e.g. a wall and that it may comprise a first 27a and a second key hole 27b suitable for receiving a rotatable key e.g. arranged in a wall. By use of said holes 26a,26b and said key holes 27a,27b, said frame part 1 may be mounted on a wall if desired.

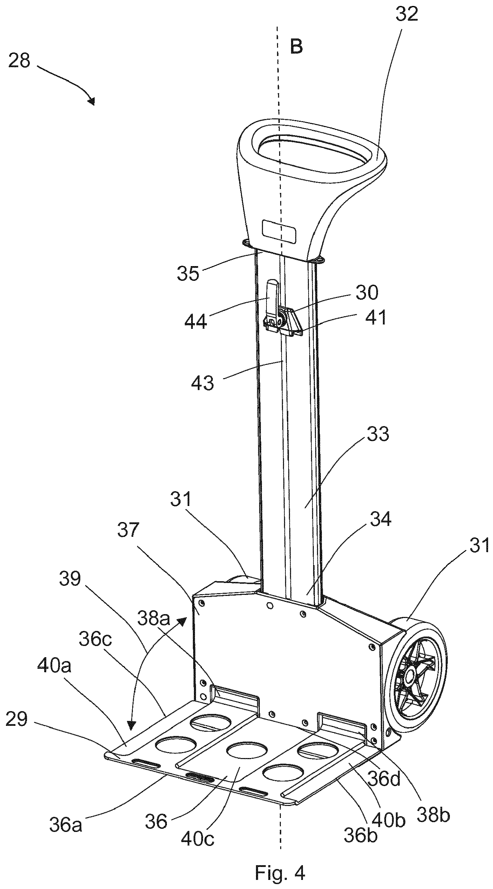

Fig. 4 shows an embodiment of a transportation unit 28, seen in a perspective view.

In Fig. 4, the transportation unit 28 is shown to comprise a carrying means 29, a stabilisation means 30, wheels 31, a handle 32, and an arm 33, where a distal end 34 of said arm 33 is connected to said carrying means 29 and said wheels 31, and a proximal end 35 of said arm 33 is connected to said handle 32.

The carrying means 29 may comprise a supporting surface 36 which is adapted to receive the bottom 3 of said at least one frame part 1. In Fig. 4, the supporting surface 36 is shown to have a four-sided shape with a first 36a, second 36b, third 36c and a fourth edge 36d, but it is obviously foreseen that said supporting surface 36 may have another shape such as a three-sided or many-sided shape. Further, it is foreseen that the carrying means 29 may comprise one or more extended members, such as rods, adapted to carry a bottom 3 of said at least one frame part 1.

It is seen that said fourth edge 36d of said supporting surface 36 may be connected to a body part 37 of said transportation unit 28 and that said connection may be a pivotal connection comprising one or more pivotal points. In Fig. 4 said pivotal connection comprises a first 38a and a second pivotal point 38b around which the carrying means 29 and/or supporting surface 36 may rotate as is indicated by the arrow 39. When the transportation unit 28 does not carry any frame parts 1, the carrying means 29 and/or supporting surface 36 may be rotated to a location where it touches said body part 37 so that the transportation unit 28 takes up the least space.

The stabilisation means may further be arranged at said carrying means 29, where it may be adapted to fixate at least part of the bottom 3 of said frame part 1.

The stabilisation means of said carrying means 29 may comprise at least one recess. In Fig. 4, the stabilisation means of said carrying means 29 is shown to comprise a first 40a and a second recess 40b. Said first 40a and second recess 40b may be arranged adjacent to the third 36c and the second edge 36b of the supporting surface 36, respectively. As shown in Fig. 4, said stabilisation means of said carrying means 29 may also comprise a third recess 40c.

Said stabilisation means of said carrying means 29 and therefore said at least one recess 40a,40b may be adapted to engage with at least one protrusion 14, which may be in the form of feet 14, arranged at the bottom 3 of said frame part 1. Thereby, the said at least one frame part 1 may be prevented from moving (e.g. sliding) relative to said carrying means 29 and transportation unit 28, when it is placed on said carrying means.

In Fig. 4, the stabilisation means 30 of said arm 33 may be displaced along a longitudinal axis B of said arm 33. The stabilisation means 30 of said arm 33 may be adapted to be releasably fixed at a given position along the longitudinal axis B of said arm 33.

When one or more frame parts 1 are placed on said carrying means 29, the stabilisation means 30 of said arm 33 may then be moved along the longitudinal axis B of said arm 33 until it touches a top of the uppermost frame part 1 on the carrying means 29 so that it stabilises the one or more frame parts 1 relative to the carrying means 29.

The stabilisation means 30 of said arm 33 may be adapted to connect to/engage with at least part of the top of said uppermost frame part 1 whereby said one or more frame parts 1 are fixated relative to the carrying means 29 which further improves the stability of the frame parts 1 on the transportation unit 28.

In Fig. 4, it is shown that the stabilisation means 30 of said arm 33 may comprise a recess 41 which may be adapted to engage with a protrusion, such as an edge 42 of the top 2 of said frame part 1. Thereby, a solid connection/fixation is obtained between said stabilisation means 30 of said arm 33 and the uppermost frame part 1 arranged on the carrying means 29.

In Fig. 4, it is shown that said arm 33 may comprise a groove 43 extending parallel with the longitudinal axis B of said arm 33. The stabilisation means 30 of said arm 33 may be adapted to slide along said groove 43 and be releasably fixed at a given position along said groove 43.

The stabilisation means 30 of said arm 33 may comprise a locking means 44 (e.g. in the form of a handle) which may be adapted to fixate/lock said stabilisation means 30 at a given position and unlock/release said stabilisation means 30 again. The releasable fixation/locking may be carried out by e.g. rotating said locking means 44 relative to said arm 33, whereby the connection (frictional force) between said stabilisation means 30 and said arm 33 is increased/decreased.

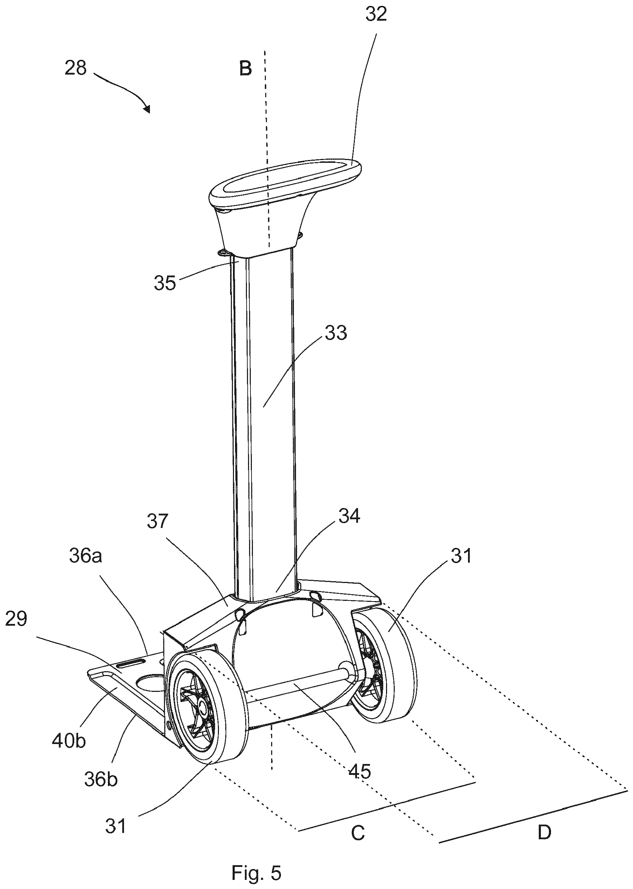

Fig. 5 shows an embodiment of a transportation unit 28, seen in a perspective view from the back.

For the same features as shown in the previous Figs., the same reference numbers have been used.

In Fig. 5, it is seen that the wheels 31 are connected to each other by use of a wheel shaft 45. Further, it is seen that the wheels 31 may be arranged so that they do not extend beyond the body part 37 of the transportation unit 28. This means that the distance C between the wheels 31 may be equal to or less than the width D of said body part 37 of the transportation unit 28.

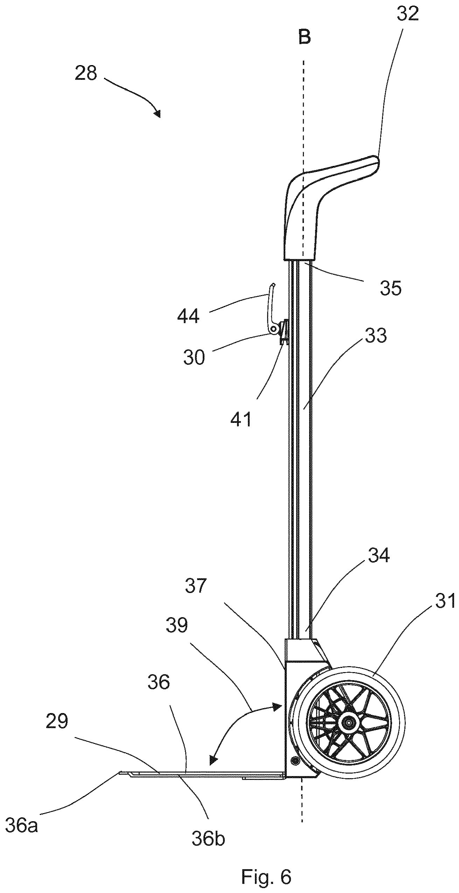

Fig. 6 shows an embodiment of a transportation unit, seen from the side.

For the same features as shown in the previous Figs., the same reference numbers have been used.

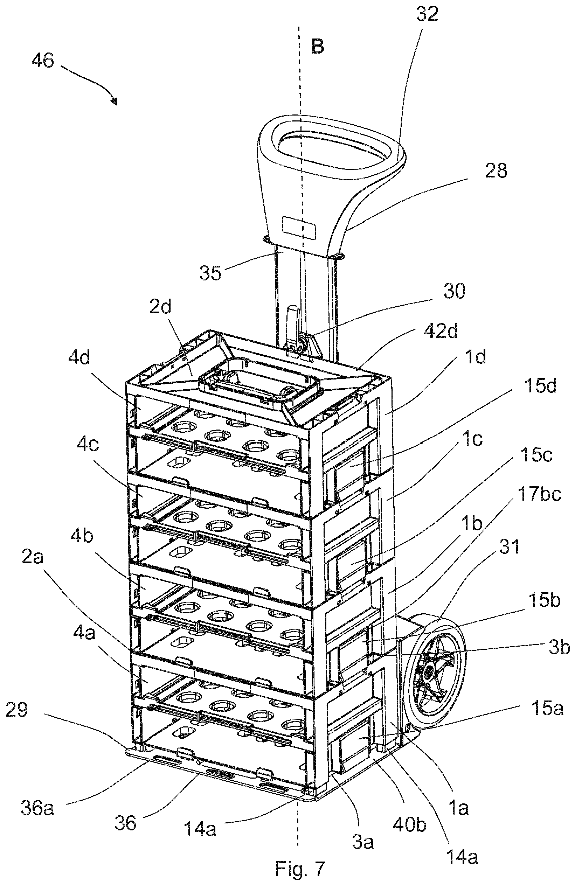

Fig. 7 shows an embodiment of a system 46 for transporting a number of assortment boxes or toolboxes 23,24, seen in a perspective view from the front.

For the same features as shown in the previous Figs., the same reference numbers have been used.

In Fig. 7, it is seen that more than one frame part 1 is arranged on the carrying means 29 of the transportation unit 1. Thus, a first 1a, second 1b, third 1c and fourth frame part 1d is shown to be arranged on said carrying means 29 and on top of each other.

It is shown that the first frame part 1a may be arranged with its bottom 3a touching the supporting surface 36 of the carrying means 29. Thus, the protrusions 14a, e.g. in the form of feet 14a, of the bottom 3a of the first frame part 1a are arranged in the first 40a and second recess 40b of the carrying means 29 so that said first frame part 1a will not slide/move relative to the carrying means 29 at least in the plane parallel with the plane of the carrying means 29 (and the plane of the supporting surface 36 of the carrying means 29).

Further, it is shown that the cross-sectional area of said supporting surface 36 may be substantially equal to a cross-sectional area of the bottom 3a of said frame parts 1a-1d.

The second frame part 1b is shown to be arranged on top of the first frame part 1a by the bottom 3b of the second frame part 1b touching the top 2a of the first frame part 1a.

The protrusions 14b (not shown), e.g. in the form of feet 14b, of the bottom 3b of the second frame part 1b may engage with recesses 22a-22d (not shown) arranged at the top of the first frame part 1a so that a solid connection is obtained between the first 1a and second frame parts 1b and so that they will not risk sliding relative to each other.

In Fig. 7, the shown frame parts 1a-1d are seen to each comprise a connection device in the form of a connection handle 15 and connection taps 16 provided at the first 5 and second side 6 of each frame part 1a-1d, similar to the connection device described in relation to Fig. 1.

Thus, in Fig. 7, the shown frame parts 1a-1d are releasably connected to each other by use of their respective connection devices. Thus, the connection handle 15b of e.g. the second frame part 1b may be rotated around a pivot point 17b so that recesses 18b of the connection handle 15b engage with connection taps (not shown) of said first frame part 1a. Thus, the engagement between a connection handle and connection taps may be a snap-engagement. The engagement may be released again by rotating/pivoting the connection handle 15b away from the connection taps. Similarly, the second frame part 1b is connected to the third frame part 1c, and the third frame part 1c is connected to the fourth frame part 1d. Thereby, the stability of said frame parts 1a-1d on the transportation unit 28 is increased.

In Fig. 7, it is further shown that the stabilisation means 30 of the arm 33 of the transportation unit 28 has been moved/displaced in the groove 43 of said arm 33 so that said stabilisation means 30 touches the uppermost frame part, i.e. the fourth frame part 1d.

In Fig. 7, it is shown that a recess 41 of the stabilisation means 30 of said arm 33 engages with the edge 42d of the top 2d of the fourth frame part 1d. Thereby, said frame parts 1a-1d are fixated relative to the transportation unit 28 so that the stability of the system 46 is improved.

When at least one frame part 1, and as the case is in Fig. 7, when more than one frame part 1a-1d are placed on the carrying means 29 of the transportation unit 28, the front opening 4,4a,4b,4c,4d of the frame part(s) 1,1a,1b,1c,1d may be faced away from said arm 33 of the transportation unit 28. If desired, just one or some of the frame part(s) 1,1a,1b,1c,1d may be arranged with their front opening 4,4a,4b,4c,4d faced away from said arm 33.

By having the front opening 4,4a,4b,4c,4d faced away from said arm 33, the user has access to the assortment boxes or toolboxes 23,24 contained in the compartments 7,7a,7b of said frame parts 1a-1d without the user having to e.g. dismount one or more of frame parts 1,1a,1b,1c,1d.

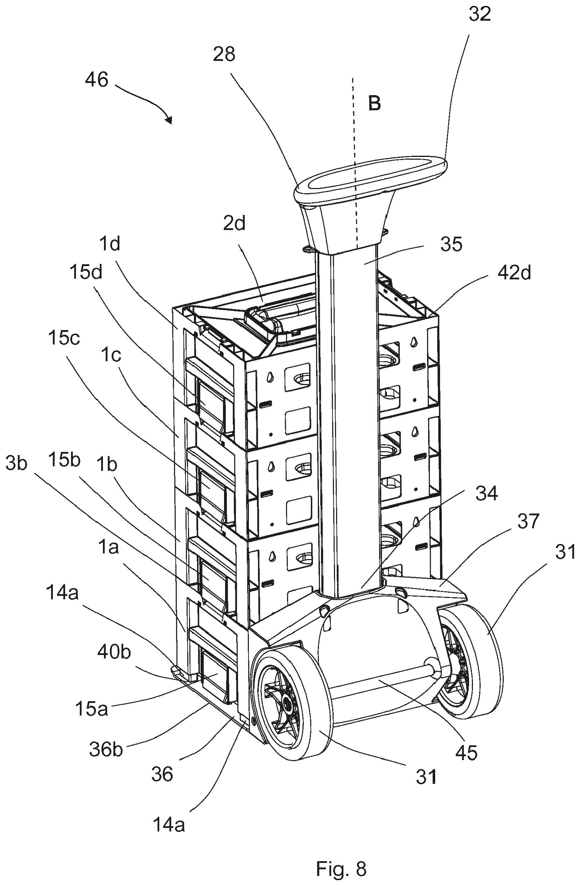

Fig. 8 shows an embodiment of a system 46 for transporting a number of assortment boxes or toolboxes 23,24, seen in a perspective view from the back of the transportation unit 28.

For the same features as shown in the previous Figs., the same reference numbers have been used.

In Fig. 8, it is seen that at least the lowermost frame part 1a (first frame part 1a) may be touching the body part 37 of the transportation unit 28. Thus, the back 25a of the lowermost frame part 1a may be touching the body part 37 of the transportation unit 28. Thereby, said body part 37 may be supporting at least said lowermost frame part 1a, when it is arranged on the carrying means 29 which further helps to support and stabilise said frame parts 1,1a,1b,1 c,1 d relative to said transportation unit 28.

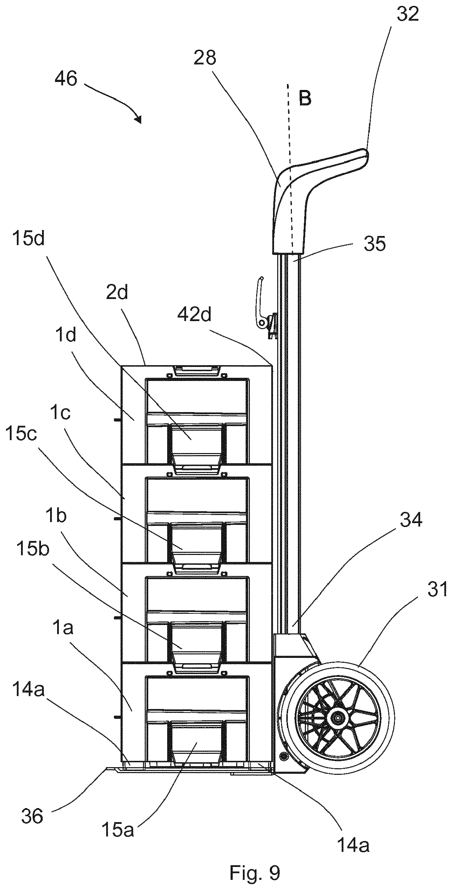

Fig. 9 shows an embodiment of a system 46 for transporting a number of assortment boxes or toolboxes 23,24, seen from the side.

For the same features as shown in the previous Figs., the same reference numbers have been used.

In Fig. 9, it is seen that at least the lowermost frame part 1a (first frame part 1a) but also part of the back 25b of the second frame part 1b may be touching the body part 37 of the transportation unit 28 to improve stability of the system 46.

## Claims

1. A system for transporting a number of assortment boxes or toolboxes, the system comprising:
- at least one frame part, said frame part comprising a top, a bottom, and a front opening, and said frame part forming at least one compartment adapted to contain at least one assortment box or toolbox, where said front opening is dimensioned for receiving and introducing the at least one assortment box or toolbox into said at least one compartment,
- a transportation unit for transporting said at least one frame part, where said transportation unit comprises a carrying means, a stabilisation means, wheels, a handle, and an arm, where a distal end of said arm is connected to said carrying means and said wheels, and a proximal end of said arm is connected to said handle, and where
- said carrying means is adapted to carry the bottom of said at least one frame part, and where
- said stabilisation means is arranged at said arm, where it is adapted to fixate said at least one frame part to said transportation unit.

2. A system according to claim 1, wherein said stabilisation means of said arm is adapted to be displaced along a longitudinal axis of said arm.

3. A system according to claim 1 or 2, wherein said stabilisation means of said arm is adapted to be releasably fixed at a given position along the longitudinal axis of said arm.

4. A system according to any of the preceding claims, wherein said stabilisation means of said arm is adapted to connect to at least part of the top of said frame part.

5. A system according to any of the preceding claims, wherein said stabilisation means of said arm comprises a recess adapted to engage with a protrusion of the top of said frame part.

6. A system according to any of the preceding claims, wherein said arm comprises a groove extending in the longitudinal axis of said arm, where the stabilisation means of said arm is adapted to slide along said groove.

7. A system according to any of the preceding claims, wherein the carrying means comprises a supporting surface which is adapted to receive the bottom of said at least one frame part.

8. A system according to claim 7, wherein a cross-sectional area of said supporting surface is substantially equal to a cross-sectional area of the bottom of said frame part.

9. A system according to any of the preceding claims, wherein said stabilisation means is further arranged at said carrying means, where it is adapted to fixate at least part of the bottom of said frame part.

10. A system according to any of the preceding claims, wherein said stabilisation means of said carrying means comprises at least one recess.

11. A system according to claim 10, wherein said at least one recess is adapted to engage with at least one protrusion arranged at the bottom of said frame part.

12. A system according to any of the preceding claims, wherein the system comprises two or more frame parts adapted to be releasably connected to each other.

13. A system according to any of the preceding claims, wherein the system comprises two or more frame parts arranged on top of each other, where the supporting surface is adapted to receive the bottom of the lowermost frame part, and the stabilisation means of said arm is adapted to fixate the uppermost frame part.

14. A system according to any of the preceding claims, wherein the front opening of said at least one frame part is adapted to be faced away from said arm, when said at least one frame part is arranged on said carrying means.
